# EUROPÄISCHE PATENTSCHRIFT

(11) **EP 1 713 359 B1**
(45) Veröffentlichungstag und Bekanntmachung des Hinweises auf die Patenterteilung: **25.01.2012**
(21) Anmeldenummer: 05707848.7
(22) Anmeldetag: 26.01.2005
(51) Int. Cl.: A47J 31/06, A47J 31/40

(54) **KAFFEEMASCHINE MIT EINER SCHUBLADE ZUM ZUFÜHREN EINES KAFFEEPADS**
COFFEE MACHINE HAVING A DRAWER THROUGH WHICH IT IS SUPPLIED WITH A COFFEE PAD
MACHINE A CAFE COMPRENANT UN TIROIR POUR INSERER UN BLOC DE CAFE

(30) Priorität: 30.01.2004 DE 102004004819
(43) Veröffentlichungstag der Anmeldung: 25.10.2006
(73) Patentinhaber: BSH Bosch und Siemens Hausgeräte GmbH, 81739 München (DE)
(72) Erfinder: MAGG, Johann, 83368 St. Georgen (DE); MAYR, Andreas, 83254 Breitbrunn (DE)
(86) Internationale Anmeldenummer: PCT/EP2005/050326
(87) Internationale Veröffentlichungsnummer: WO 2005/072574

(56) Entgegenhaltungen:
- WO-A-96/08990
- DE-U1- 20 210 990
- DE-U1- 29 601 233

## Beschreibung

Die Erfindung betrifft eine Kaffeemaschine gemäß dem Oberbegriff von Anspruch 1.

Kaffeemaschinen des Standes der Technik arbeiten nach unterschiedlichen Prinzipien. Die gängigsten Modelle sind die sogenannten drucklos arbeitenden Kaffeemaschinen. Bei diesen fließt Wasser aus einem Vorratsbehälter in ein elektrisch beheizbares Rohr. Insbesondere durch Dampfentwicklung in diesem Rohr wird erwärmtes Wasser dann durch eine Steigleitung zu einem Auslauf gedrückt, über welchen das erwärmte Wasser dann in einen Kaffeefilter tropft. Aus diesem Kaffeefilter kann der Filterkaffee bei atmosphärischem Druck dann in eine Kanne fließen.

Im Gegensatz hierzu liegt bei Espressomaschinen ein erhöhter Druck im Bereich des Kaffeemehls vor, beispielsweise 15 bar. Dies wird erreicht, indem Wasser aus einem Wasserbehälter oder einer sonstigen Wasserzuführung einer elektromotorisch angetriebenen Pumpe zugeführt wird, die das Wasser dann unter hohem Druck über einen elektrisch beheizbaren Bereich einer Kaffeemehlaufnahmeeinrichtung zuführt. Diese Kaffeemehlaufnahmeeinrichtung umfasst im Allgemeinen ein Sieb zur Aufnahme des Kaffees. Zur Erzeugung des hohen Drucks im Bereich des Kaffees ist die Kaffeemehlaufnahmeeinrichtung während des Betriebs in einem gegen die Atmosphäre abgedichteten Bereich angeordnet, der als Druckraum oder Brühkammer bezeichnet werden kann.

Bei einer weiteren prinzipiell anders arbeitenden Kaffeemaschine ist vorgesehen, das Wasser zur Zubereitung des Kaffees zunächst aus einem Wasserbehälter in einen beheizbaren Zwischenbehälter zu überführen. Von diesem Zwischenbehälter gelangt das erwärmte Wasser zu einer elektromotorisch angetriebenen Pumpe, von der es unter erhöhtem Druck, beispielsweise 2 bis 3 bar, einer Kaffeemehlaufnahmeeinrichtung zugeführt wird. Dabei ist vorgesehen, dass der Kaffee, anders als bei der Espressomaschine, nicht in loser Form als Kaffeemehl in die Kaffeemehlaufnahmeeinrichtung eingebracht wird, sondern in Form eines Kaffeepads, das heißt in verdichteter Form mit Filterpapier umgeben, in einen Halter eingelegt wird. Der Halter kann mit einer Halterabdeckung, über die Wasser zugeführt wird, einen abgedichteten Druckraum bilden. Dem Halter für die Kaffeepads kommen dabei mehrere Funktionen zu. Zum einen stellt der Halter eine Dichtfläche bereit, so dass eine Druckkammer gebildet werden kann. Weiterhin hat der Halter eine Auslassöffnung, aus der der Kaffee austreten kann. Ferner soll der Kaffeepad in einer Weise in dem Halter gelagert sein, so dass das Durchströmen des Kaffeepads nicht behindert wird. Eine derartige Kaffeemaschine nimmt eine Zwischenstellung zwischen einer herkömmlichen drucklosen Kaffeemaschine und einer Espressomaschine ein.

Die WO 01/15582 A1 betrifft eine Kaffeemaschine, der das Kaffeemehl in Form von Kaffeepads zugeführt wird. Die Kaffeepads werden in ein Unterteil der Brühkammer eingelegt, und das Oberteil der Brühkammer kann über ein Scharnier von dem Benutzer auf das Unterteil geklappt werden, wobei eine einrastende Verbindung zwischen den beiden relativ zueinander klappbaren Gehäuseteilen für eine Abdichtung der Brühkammer sorgt. Problematisch an diesem System ist, dass das Kaffeepad nach dem Brühvorgang beim Öffnen der Kaffeemaschine am Brühkammeroberteil kleben bleiben kann. Ein weiteres Problem kann entstehen, wenn die Kaffeemaschine im geöffneten Zustand betätigt wird, da dann das heiße Wasser in Richtung des Benutzers der Kaffeemaschine spritzen kann.

Aus der EP 1 050 258 A1 ist eine Kaffeemaschine bekannt, bei der Kaffepads in eine herausgefahrene Schublade eingelegt und dann durch Hereinfahren der Schublade in die Brühposition gebracht werden. Zur Abdichtung der Brühkammer wird vor dem Brühvorgang ein Brühkammeroberteil automatisch von oben üben den Kaffeepad gefahren. Nach dem Brühvorgang werden die Kaffeepads automatisch innerhalb der Kaffeemaschine in einem Auffangbehälter entsorgt. Insbesondere aufgrund der motorisch angetriebenen Bauteile der Kaffeemaschine ist diese in der Fertigung sehr aufwendig und daher teuer.

Die DE 296 01 233 U1 und die DE 202 10 990 U1 offenbaren einen Brühkopf mit Ober- und Unterteil zur Herstellung von Kaffee, wobei Brühkammeroberteil und Brühkammerunterteil (bzw. Brühkopfoberteil und Brühkopfunterteil) für die Zuführung von frischem Kaffeepulver geöffnet sein muss und anschließend für den Brühvorgang geschlossen werden muss. Hierfür ist das Brühkopfoberteil bewegbar bzw. das Brühkopfunterteil kippbar ausgebildet.

Der Erfindung liegt die Aufgabe zugrunde, eine einfache und sichere Lösung für das Abdichten einer Brühkammer zur Verfügung zu stellen.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung baut auf der gattungsgemäßen Kaffeemaschine dadurch auf, dass in einer Schublade ein Kaffeepadhalter angeordnet ist, der im eingeschobenen Zustand der Schublade von einer im Wesentlichen vertikal durch den Hebelmechanismus verschiebbaren Halteeinrichtung zumindest teilweise umgriffen wird, so dass der Kaffeepadhalter mit der Halteeinrichtung angehoben werden kann, und dass der Kaffeepadhalter das Brühkammerunterteil bildet. Die Schublade kann also zunächst unbehindert von Dichtmitteln in die Kaffeemaschine in horizontaler Richtung eingeschoben werden. Nachher kann zur Abdichtung der Brühkammer eine von der Horizontalbewegung unabhängige vorzugsweise vertikale Stellbewegung erfolgen.

In einer Alternative der Erfindung ist das Brühkammerunterteil auf das Brühkammeroberteil zu bewegbar. Dabei kann das Brühkammeroberteil, welches üblicherweise den Zulauf des Wassers und evtl. Heizmmittel für das Vorwärmen der Brühkammer aufweist, fest an der Kaffeemaschine angeordnet sein. Dadurch wird eine einfache Gestaltung der Kaffeemaschine erzielt. Eine aufwendige und kostenintensive Anbindung des Wasserzulaufs oder des Heizmittels an ein bewegtes Brühkammerteil entfällt.

In einer zweiten Alternative der Erfindung ist das Brühkammeroberteil auf das Brühkammerunterteil zu bewegbar. Dabei kann die Schublade und das Brühkammerunterteil vorzugsweise einteilig ausgebildet und fest an der Kaffeemaschine angeordnet sein. Dadurch entfällt eine Hubbewegung zwischen Brühkammerunterteil und Schublade, so dass diese Teile kostengünstig in einfacher Weise ausgestaltet sein können.

In einer weiteren Alternative der Erfindung sind das Brühkammeroberteil und das Brühkammerunterteil aufeinander zu bewegbar. Dadurch ergibt sich der Vorteil, dass die Brühkammer in sehr kurzer Zeit sehr weit geöffnet werden kann, wodurch ein Einlegen und eine Entnahme des Kaffeepads erleichtert ist.

Das Stellmittel kann einen elektrischen Antrieb aufweisen, so dass die Brühkammer beispielsweise durch ledigliches Drücken eines Tasters geöffnet bzw. geschlossen werden kann.

Das Stellmittel kann alternativ oder zusätzlich einen mechanischen Antrieb aufweisen. Dies hat den Vorteil, dass eine solche Lösung auf sehr kostengünstige Weise realisiert werden kann. Diese Lösung ist auch unabhängig von einer elektrischen Stromversorgung.

Der mechanische Antrieb kann vorzugsweise ein Hubmechanismus sein, der insbesondere das Brühkammeroberteil bzw. das Brühkammerunterteil in vertikaler Richtung bewegt. Der mechanische Antrieb kann beispielsweise mittels eines Hebels von Hand erfolgen.

Erfindungsgemäß ist vorgesehen, dass in der Schublade ein Kaffeepadhalter angeordnet ist, der im eingeschobenen Zustand der Schublade von einer im Wesentlichen vertikal durch den Hebelmechanismus verschiebbaren Halteeinrichtung zumindest teilweise umgriffen wird, so dass der Kaffeepadhalter mit der Halteeinrichtung angehoben werden kann, und dass der Kaffeepadhalter das Brühkammerunterteil bildet. Die Schublade kann somit nach horizontalem Einschieben in die Kaffeemaschine in ihrer Vertikalposition unnverändert bleiben. Vielmehr wird nur ein in der Schublade angeordneter Kaffeepadhalter als Brühkammerunterteil angehoben.

In diesem Zusammenhang ist es nützlich, dass die Halteeinrichtung zwei den Kaffeepad□halter an gegenüberliegenden Seiten umgreifende Klammern aufweist. Dies ist eine ein□fache Auslegung der Halteeinrichtung, die zudem ein kontrolliertes Anheben und somit ein kontrolliertes Abdichten der Brühkammer ermöglicht.

Die erfindungsgemäße Kaffeemaschine ist in vorteilhafter Weise dadurch weitergebildet, dass jede Klammer an ihrem unteren Ende einen Fortsatz aufweist, der beim Anheben der Halteeinrichtung den Kaffeepadhalter mit einer nach oben gerichteten Kraft beaufschlagt. Auch hier ist festzustellen, dass eine besonders einfache Lösung vorliegt. Insbesondere kann vorgesehen sein, dass die Fortsätze unter den Kaffeepadhalter greifen. Beim Absenken der Halteeinrichtung wird der Kaffeepadhalter daher, durch die Schwer□kraft in seine abgesenkte Position überführt.

Es ist bevorzugt, dass die Innenseite des Brühkammeroberteils aus elastischem Material gefertigt ist. Ein beispielsweise aus Silikon gefertigtes Innenteil des Brühkammer□oberteils ist kostengünstig, und es kann ohne die Bereitstellung weiterer Dichtungsmittel eine abdichtende Verbindung zu dem vorzugsweise aus Hartkunststoff gefertigten Brüh□kammerunterteil zur Verfügung stellen.

Weiterhin ist nützlicherweise vorgesehen, dass sich der Hebelmechanismus mit mindes□tens zwei Vierkantbereichen auf dem Brühkammeroberteil abstützt, wobei die Vierkantbe□reiche im Wesentlichen rechteckig sind und jeweils eine lange und eine kurze Seite auf□weisen, dass die Vierkantbereiche im abgesenkten Zustand der Halteeinrichtung mit einer langen Seite auf dem Brühkammeroberteil aufliegen und dass die Vierkantbereiche im angehobenen Zustand der Halteeinrichtung mit einer kurzen Seite auf dem Brühkammermoberteil aufliegen. Durch Umlegen des Hebels kann somit der gesamte Hebelmechanismus durch die als Nocken wirkenden Vierkantbereiche angehoben und abgesenkt werden, wodurch eine besonders einfache Realisierung der erfindungsgemäßen Hebelfunktion zur Verfügung gestellt wird.

Es ist bevorzugt, dass die Vierkantbereiche im angehobenen Zustand der Halteeinrichtung mit einer kurzen Seite in Vertiefungen des Brühkammeroberteils liegen. Hierdurch nimmt der Hebelmechanismus im geschlossenen Zustand der Brühkammer bei komprimiertem Brühkammeroberteil eine stabile Stellung ein. Es wird insbesondere vermieden, dass die Brühkammer unbeabsichtigt während des Brühvorgangs geöffnet wird. Dies wird noch dadurch unterstützt, dass durch den in der Brühkammer vorliegenden Druck während des Brühvorgangs eine Verbesserung des Halts der kurzen Seite in der Vertiefung des Brühkammeroberteils erfolgt.

Der Erfindung liegt die Erkenntnis zugrunde, dass mit einem einfach aufgebauten manuell bedienbaren Hebelmechanismus eine zuverlässige Abdichtung einer Brühkammer erfolgen kann.

In einer besonders vorteilhaften Ausgestaltung ist der Kaffepadhalter teleskopierbar an der Schublade gelagert. Dadurch ist der Kaffeepadhalter zum Heben und Senken zuverlässig in der Schublade geführt. Eine solche Führung, die erfindungsgemäß vorzugsweise teleskopierbar ausgebildet ist, kann beispielsweise durch zwei koaxial ineinanderliegender Rohrabschnitte am Kaffeepadhalter und an der Schublade gebildet werden. Durch eine solche teleskopierbare Führung ist ein störungsfreies Heben und Senken des Kaffepadhalters sichergestellt.

Die Erfindung wird nun mit Bezug auf die begleitenden Zeichnungen anhand besonders bevorzugter Ausführungsformen beispielhaft erläutert. Dabei zeigt:

Figur 1a eine perspektivische Darstellung einer Kaffeemaschine in einem ersten Zustand zur Erläuterung der Erfindung;

Figur 1b eine perspektivische Darstellung einer Kaffeemaschine in einem zweiten Zustand zur Erläuterung der Erfindung;

Figur 2a eine perspektivische Darstellung einer geschlossenen Brühkammer;

Figur 2b eine Schnittansicht einer geschlossenen Brühkammer;

Figur 3a eine perspektivische Darstellung einer geöffneten Brühkammer; und

Figur 3b eine Schnittansicht einer geöffneten Brühkammer.

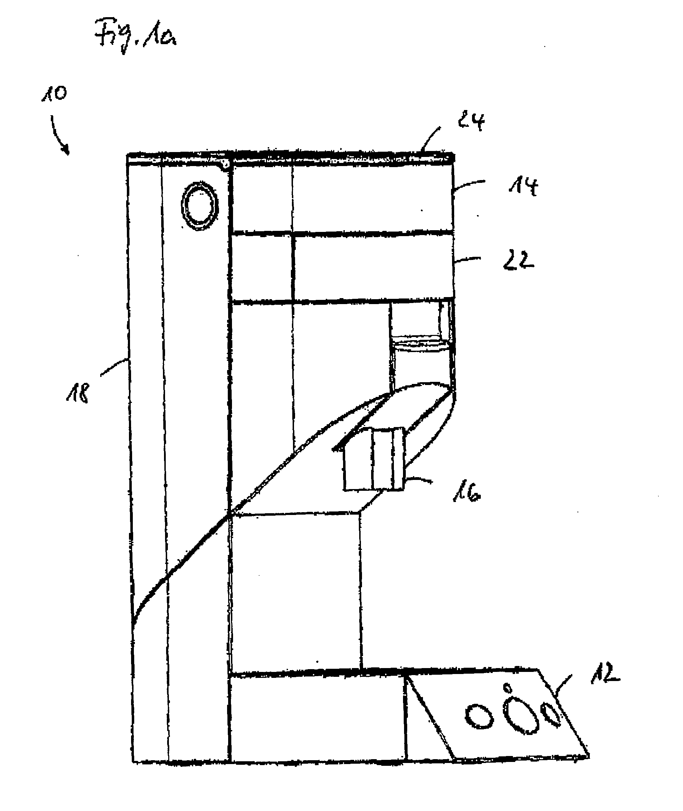

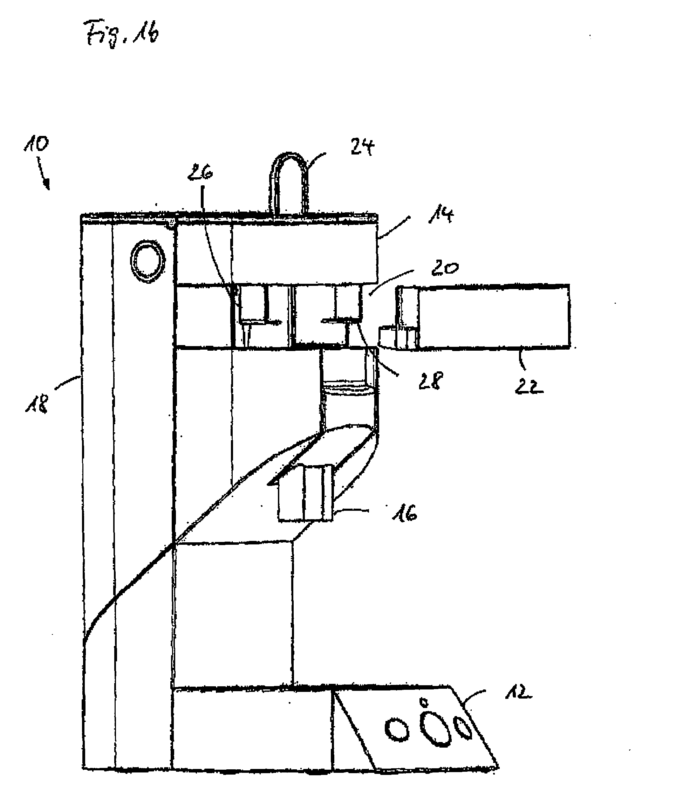

Figur 1a zeigt eine perspektivische Darstellung einer Kaffeemaschine in einem ersten Zustand zur Erläuterung der Erfindung. Figur 1b zeigt eine perspektivische Darstellung einer Kaffeemaschine in einem zweiten Zustand zur Erläuterung der Erfindung. Die erfindungsgemäße Kaffeemaschine 10 umfasst ein flaches Vorderteil 12 und eine säulenartige hintere Baugruppe 14. Auf dem Vorderteil 12 können Tassen zur Entnahme von Kaffee über einen Auslauf 16 angeordnet werden. In die hintere Baugruppe 14 ist ein Wassebehälter 18 eingesetzt. Die hintere Baugruppe 14 umfasst weiterhin einen Einschubbereich 20, in den eine Schublade 22 mit eingesetztem Kaffeepadhalter einschiebbar ist. Die Schublade 22 ist in Figur 1a im eingesetzten und in Figur 1b im entnommenen Zustand abgebildet. Oberhalb des Einschubbereiches 20 sind innerhalb des Gehäuses eine Wasserzuführung sowie eine Halterabdeckung angeordnet, die zusammen mit dem in der Schublade 22 sitzenden Halter die Brühkammer bildet. Diese wird nach dem Einsetzen der Schublade 22 durch Umlegen des Hebels 24 und hierdurch bewirktes Anheben der Klammern 26, 28 durch Zusammenpressen von Halter und Halterabdeckung abgedichtet.

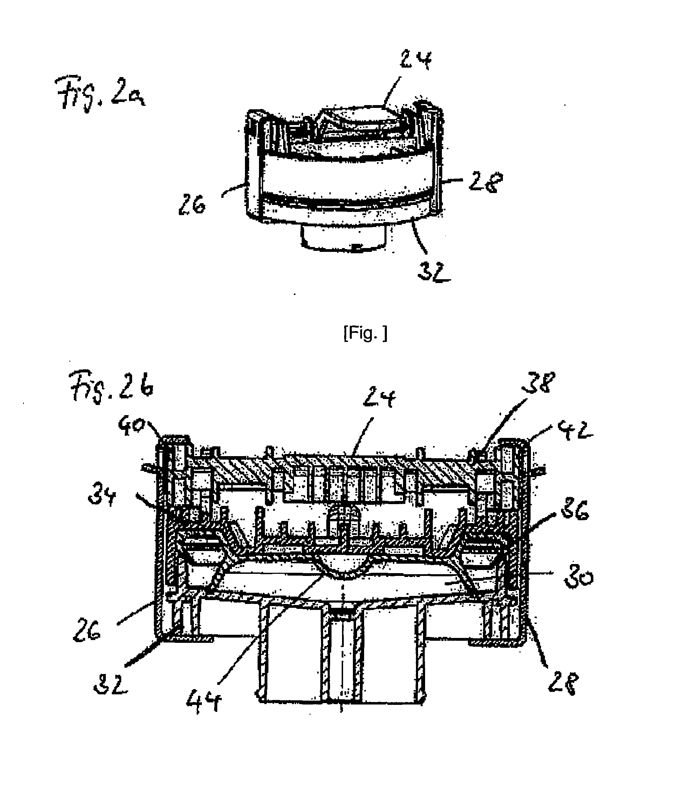

Figur 2a zeigt eine perspektivische Darstellung einer geschlossenen Brühkammer. Figur 2b zeigt eine Schnittansicht einer geschlossenen Brühkammer. Die Brühkammer 30 wird durch Aufeinanderpressen eines als Brühkammerunterteil wirkenden Kaffeepadhalters 32 und eines Brühkammeroberteils 34 gebildet. Die der Brühkammer 30 zugewandte Inneneite 36 des Brühkammeroberteils 34 ist aus elastischem Material gefertigt, beilspielsweise aus Silikon. Durch Zusammenpressen dieser als Dichtung wirkenden Innenseite 36 mit dem vorzugsweise aus Hartkunststoff gefertigten Kaffeepadhalter 32 wird die Brühkamrner 30 abgedichtet. Hierzu sind die Klammern 26, 28 vorgesehen, die den Kaffeepadhalter 32 untergreifen und an ihrem anderen Ende auf den Endbereichen des Hebels 24 aufliegen. An den Griffbereich des Hebels 24 schließt sich eine als Welle 38 wirkende längliche Struktur an, die an ihren Enden Vierkantbereiche 40, 42 aufweist. Diese Vierkantbereiche 40, 42 haben eine lange Seite und eine kurze Seite, wobei in der Darstellung gemäß Figur 2b der Blick auf die lange Seite freigegeben ist. Die Vierkantbereiche 40, 42 stehen somit mit ihrer kurzen Seite auf dem Brühkammeroberteil 34 auf. Die als Nocken wirkenden Vierkantbereiche 40, 42 liegen in dieser Stellung vorzugsweise in einer leichten Vertiefung im Brühkammeroberteil 34. Auf diese Weise wird eine sichere Verriegelung des Hebelmechanismus zur Verfügung gestellt. Dies wird noch dadurch unterstützt, dass wäh□rend des Brühvorgangs ein Überdruck in der Brühkammer 30 vorliegt, der die Verriegelung der Vierkantbereiche in der Vertiefung des Brühkammeroberteils 34 unterstützt.

In Figur 2b ist weiterhin ein zentral am Brühkammeroberteil angeordnetes Abdrückele□ment zu erkennen, das einstückig mit dem elastischen Bereich des Brühkammeroberteils ausgebildet ist. Bei eingelegtem Kaffeepad ist dieses Abdrückelement 44 komprimiert, so dass beim Absenken des Kaffeepadhalters 32 ein Anhaften des Kaffeepads an der Innenseite 36 des Brühkammeroberteils 34 vermieden wird.

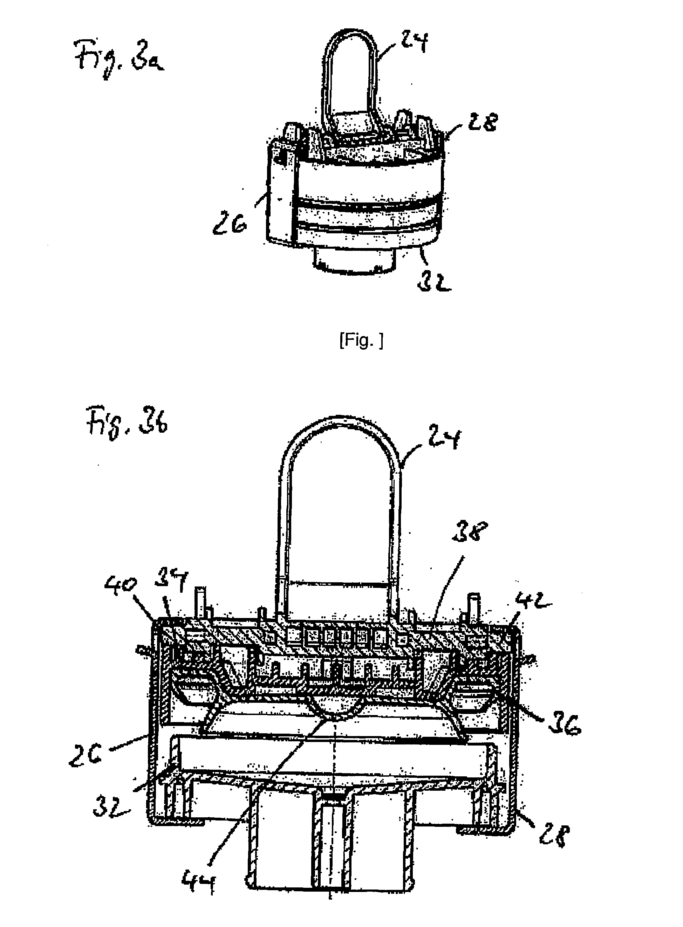

Figur 3a zeigt eine perspektivische Darstellung einer geöffneten Brühkammer. Figur 3b zeigt eine Schnittansicht einer geöffneten Brühkammer. Durch Umlegen des Hebels 24 aus der in den Figuren 2a und 2b dargestellten Position um 90° werden durch entsprechendes Verdrehen der Welle 38 die Vierkantbereiche 40, 42 ebenfalls um 90° verdreht. Folglich liegen diese nun mit ihrer langen Seite auf dem Brühkammeroberteil 34 auf. In Figur 3b ist insofern der Blick auf die kurze Seite der Vierkantbereiche 40, 42 freigegeben. Demzufolge sind die Klammern 26, 28 und mit ihnen der Kaffeepadhalter 32 abgesenkt. Ausgehend von diesem Zustand kann der Kaffeepadhalter 32 zusammen mit der Schublade 22 (siehe Figuren 1a, 1b) aus der Kaffeemaschine entnommen werden, um einen verbrauchten Kaffeepad zu entsorgen und/ oder einen neuen Kaffeepad einzulegen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wie in den Ansprüchen definiert wesentlich sein.

Bezugszeichenliste:

10 Kaffeemaschine

12 Vorderteil

14 hintere Baugruppe

16 Auslauf

18 Wasserbehälter

20 Einschubbereich

22 Schublade

24 Hebel

26 Klammer

28 Klammer

30 Brühkammer

32 Kaffeepadhalter

34 Brühkammeroberteil

35 Brühkammerunterteil

36 Innenseite des Brühkammeroberteils

38 Welle

40 Vierkantbereich

42 Vierkantbereich

44 Abdrückelement

## Patentansprüche

1. Kaffeemaschine mit einer Schublade (22), die zum Zuführen eines Kaffeepads mit eingelegtem Kaffeepad in die Kaffeemaschine (10) im Wesentlichen horizontal einschiebbar ist, wobei zum Öffnen und Schließen einer von einem Brühkammeroberteil (34) und ein Brühkammerunterteil gebildeten Brühkammer ein Stellmittel vorgesehen ist, durch das zur Ausbildung einer abgedichteten Brühkammer (30) wenigstens eines von Brühkammerunterteil (35) und Brühkammeroberteil (34) auf das andere zu bewegbar ist, **dadurch gekennzeichnet, dass** in der Schublade (22) ein Kaffeepadhalter (32) angeordnet ist, der im eingeschobenen Zustand der Schublade (22) von einer im Wesentlichen vertikal durch den Hebelmechanismus verschiebbaren Halteeinrichtung zumindest teilweise umgriffen wird, so dass der Kaffeepadhalter (32) mit der Halteeinrichtung angehoben werden kann, und dass der Kaffeepadhalter (32) das Brühkammerunterteil bildet.

2. Kaffeemaschine nach Anspruch 1, **dadurch gekennzeichnet, dass** das Brühkammerunterteil (35) auf das Brühkammeroberteil (34) zu bewegbar ist.

3. Kaffeemaschine nach Anspruch 1, **dadurch gekennzeichnet, dass** das Brühkammeroberteil (34) auf das Brühkammerunterteil (35) zu bewegbar ist.

4. Kaffeemaschine nach Anspruch 1, **dadurch gekennzeichnet, dass** das Brühkammeroberteil (34) und das Brühkammerunterteil (35) aufeinanderzu bewegbar sind.

5. Kaffeemaschine nach einem der Ansprüche 1 bis 4, **dadurch gekennzeichnet, dass** das Stellmittel einen elektrischen Antrieb aufweist.

6. Kaffeemaschine nach einem der Ansprüche 1 bis 4, **dadurch gekennzeichnet, dass** das Stellmittel einen mechanischen Antrieb aufweist.

7. Kaffeemaschine nach Anspruch 6, **dadurch gekennzeichnet, dass** der mechanische Antrieb ein Hubmechanismus ist.

8. Kaffeemaschine nach Anspruch 6 oder 7, **dadurch gekennzeichnet, dass** der mechanische Antrieb mittels eines Hebels von Hand betätigbar ist.

9. Kaffeemaschine nach einem der Ansprüche 1 bis 9, **dadurch gekennzeichnet, dass** die Halteeinrichtung zwei den Kaffeepadhalter (32) an gegenüberliegenden Seiten umgreifende Klammern (26, 28) aufweist.

10. Kaffeemaschine nach Anspruch 9, **dadurch gekennzeichnet, dass** jede Klammer (26, 28) an ihrem unteren Ende einen Fortsatz aufweist, der beim Anheben der Halteeinrichtung den Kaffeepadhalter (32) mit einer nach oben gerichteten Kraft beaufschlagt.

11. Kaffeemaschine nach Anspruch 10, **dadurch gekennzeichnet, dass** zumindest eine der Klammern (26, 28) einen weiteren Fortsatz aufweist, der beim Absenken der Halteeinrichtung den Kaffeepadhalter (32) mit einer nach unten gerichteten Kraft beaufschlagt.

12. Kaffeemaschine nach einem der vorangehenden Ansprüche, **dadurch gekennzeichnet, dass** die Innenseite des Brühkammeroberteils (36) aus elastischem Material gefertigt ist.

13. Kaffeemaschine nach einem der vorangehenden Ansprüche, **dadurch gekennzeichnet, dass** sich das Stellmittel, insbesondere der Hebelmechanismus mit mindestens zwei Vierkantbereichen (40, 42) auf dem Brühkammeroberteil (34) abstützt, wobei die Vierkantbereiche (40, 42) im Wesentlichen rechteckig sind und jeweils eine lange und eine kurze Seite aufweisen, dass die Vierkantbereiche (40, 42) im abgesenkten Zustand der Halteeinrichtung mit einer langen Seite auf dem Brühkammeroberteil (34) aufliegen und dass die Vierkantbereiche (40, 42) im angehobenen Zustand der Halteeinrichtung mit einer kurzen Seite auf dem Brühkammeroberteil (34) aufliegen.

14. Kaffeemaschine nach Anspruch 13, **dadurch gekennzeichnet, dass** die Vierkantbereiche (40, 42) im angehobenen Zustand der Halteeinrichtung mit einer kurzen Seite in Vertiefungen des Brühkammeroberteils (34) liegen.

15. Kaffeemaschine nach einem der vorangehenden Ansprüche, **dadurch gekennzeichnet, dass** der Kaffepadhalter (32) teleskopierbar an der Schublade (22) gelagert ist.

## Claims

1. Coffee machine with a drawer (22) which for the feeding of a coffee pad can be pushed, with inserted coffee pad, substantially horizontally into the coffee machine (10), wherein for opening and closing a brewing chamber, which is formed by a brewing chamber upper part (34) and a brewing chamber lower part, a setting means is provided by which at least one of the brewing chamber lower part (35) and the brewing chamber upper part (34) is movable onto the other for formation of a sealed brewing chamber (30), **characterised in that** arranged in the drawer (22) is a coffee pad holder (32) which in the pushed-in state of the drawer (22) is at least partly engaged around by a holding device displaceable substantially vertically by the lever mechanism so that the coffee pad holder (32) can be raised by the holding device, and the coffee pad holder (32) forms the brewing chamber lower part.

2. Coffee machine according to claim 1, **characterised in that** the brewing chamber lower part (35) is movable onto the brewing chamber upper part (34).

3. Coffee machine according to claim 1, **characterised in that** the brewing chamber upper part (34) is movable onto the brewing chamber lower part (35).

4. Coffee machine according to claim 1, **characterised in that** the brewing chamber upper part (34) and the brewing chamber lower part (35) are movable onto one another.

5. Coffee machine according to any one of claims 1 to 4, **characterised in that** the setting means comprises an electric drive.

6. Coffee machine according to any one of claims 1 to 4, **characterised in that** the setting means comprises a mechanical drive.

7. Coffee machine according to claim 6, **characterised in that** the mechanical drive comprises a lifting mechanism.

8. Coffee machine according to claim 6 or 7, **characterised in that** the mechanical drive is manually actuable by means of a lever.

9. Coffee machine according to any one of claims 1 to 8, **characterised in that** the holding device comprises two clips (26, 28) engaging around the coffee pad holder (32) at opposite sides.

10. Coffee machine according to claim 9, **characterised in that** each clip (26, 28) has at the lower end thereof a projection which when the holding device is raised loads the coffee pad holder (32) by an upwardly directed force.

11. Coffee machine according to claim 10, **characterised in that** at least one of the clips (26, 28) comprises a further projection which when the holding device is lowered loads the coffee pad holder (32) by a downwardly directed force.

12. Coffee machine according to any one of the preceding claims, **characterised in that** the inner side of the brewing chamber upper part (26) is made of resilient material.

13. Coffee machine according to any one of the preceding claims, **characterised in that** the setting means, particularly the lever mechanism, is supported by at least two quadrilateral regions (40, 42) on the brewing chamber upper part (34), wherein the quadrilateral regions (40, 42) are substantially rectangular and each have a long side and a short side, that the quadrilateral regions (40, 42) in the lowered state of the holding device rest by a long side on the brewing chamber upper part (34) and that the quadrilateral regions (40, 42) in the raised state of the holding device rest by a short side on the brewing chamber upper part (34).

14. Coffee machine according to claim 13, **characterised in that** the quadrilateral regions (40, 42) in the raised state of the holding device rest by a short side in recesses of the brewing chamber upper part (34).

15. Coffee machine according to any one of the preceding claims, **characterised in that** the coffee pad holder (32) is telescopically mounted on the drawer (22).

## Revendications

1. Machine à café comprenant un tiroir (22) qui, pour introduire une dosette de café, est insérable, avec une dosette de café insérée, de manière essentiellement horizontale dans la machine à café (10), un moyen de réglage étant ménagé pour ouvrir et fermer une chambre d'infusion formée par une partie supérieure de chambre d'infusion (34) et une partie inférieure de chambre d'infusion, au moyen duquel au moins une de la partie inférieure de chambre d'infusion (35) et de la partie supérieure de chambre d'infusion (34) est déplaçable en direction de l'autre pour former une chambre d'infusion étanchéifiée (30), **caractérisée en ce qu'**un support de dosette de café (32) est disposé dans le tiroir (22), lequel support, à l'état inséré du tiroir (22), est entouré au moins en partie par un dispositif de maintien déplaçable essentiellement verticalement par le mécanisme à levier, de manière à ce que le support de dosette de café (32) puisse être soulevé avec le dispositif de maintien, et **en ce que** le support de dosette de café (32) forme la partie inférieure de la chambre d'infusion.

2. Machine à café selon la revendication 1, **caractérisée en ce que** la partie inférieure de chambre d'infusion (35) est déplaçable en direction de la partie supérieure de chambre d'infusion (34).

3. Machine à café selon la revendication 1, **caractérisée en ce que** la partie supérieure de chambre d'infusion (34) est déplaçable en direction de la partie inférieure de chambre d'infusion (35).

4. Machine à café selon la revendication 1, **caractérisée en ce que** la partie supérieure de chambre d'infusion (34) et la partie inférieure de chambre d'infusion (35) sont déplaçables l'une en direction de l'autre.

5. Machine à café selon l'une quelconque des revendications 1 à 4, **caractérisée en ce que** le moyen de réglage présente un entraînement électrique.

6. Machine à café selon l'une quelconque des revendications 1 à 4, **caractérisée en ce que** le moyen de réglage présente un entraînement mécanique.

7. Machine à café selon la revendication 6, **caractérisée en ce que** l'entraînement mécanique est un mécanisme de levage.

8. Machine à café selon la revendication 6 ou 7, **caractérisée en ce que** l'entraînement mécanique est commandable à la main au moyen d'un levier.

9. Machine à café selon l'une quelconque des revendications 1 à 8, **caractérisée en ce que** le dispositif de maintien présente deux pinces (26, 28) entourant le support de dosette de café (32) sur des côtés opposés.

10. Machine à café selon la revendication 9, **caractérisée en ce que** chaque pince (26, 28) présente un prolongement sur son extrémité inférieure, lequel, lorsque le dispositif de maintien est soulevé, contraint le support de dosette de café (32) avec une force dirigée vers le haut.

11. Machine à café selon la revendication 10, **caractérisée en ce qu'**au moins une des pinces (26, 28) présente un prolongement supplémentaire qui, lorsque le dispositif de maintien est abaissé, contraint le support de dosette de café (32) avec une force dirigée vers le bas.

12. Machine à café selon l'une quelconque des revendications précédentes, **caractérisée en ce que** le côté intérieur de la partie supérieure de chambre d'infusion (36) est fabriqué dans une matière élastique.

13. Machine à café selon l'une quelconque des revendications précédentes, **caractérisée en ce que** le moyen de réglage, notamment le mécanisme de levage, s'appuie avec au moins deux zones carrées (40, 42) sur la partie supérieure de chambre d'infusion (34), les zones carrées (40, 42) étant essentiellement rectangulaires et présentant respectivement un grand et un petit côtés, **en ce que** les zones carrées (40, 42), à l'état abaissé du dispositif de maintien, reposent sur la partie supérieure de chambre d'infusion (34) avec un grand côté et **en ce que** les zones carrées (40, 42), à l'état soulevé du dispositif de maintien, reposent sur la partie supérieure de chambre d'infusion (34) avec un petit côté.

14. Machine à café selon la revendication 13, **caractérisée en ce que** les zones carrées (40, 42), à l'état soulevé du dispositif de maintien, reposent dans des approfondissements de la partie supérieure de chambre d'infusion (34) avec un petit côté.

15. Machine à café selon l'une quelconque des revendications précédentes, **caractérisée en ce que** le support de dosette de café (32) est logé de manière télescopique sur le tiroir (22).
